(19) **Europäisches Patentamt / European Patent Office / Office européen des brevets**

(11) **EP 4 154 093 B1**

(12) **EUROPEAN PATENT SPECIFICATION**

(45) Date of publication and mention
of the grant of the patent:
**13.12.2023 Bulletin 2023/50**

(51) International Patent Classification (IPC):
*G06F 3/01* (2006.01)    *G10L 21/06* (2013.01)
*G06T 13/40* (2011.01)    *G06N 3/02* (2006.01)
*B25J 11/00* (2006.01)    *A61F 4/00* (2006.01)
*G06N 3/044* (2023.01)    *G06N 3/047* (2023.01)
*G06N 3/082* (2023.01)    *G06N 3/084* (2023.01)
*G06T 13/20* (2011.01)    *G06V 10/82* (2022.01)
*G06V 40/20* (2022.01)    *G10L 21/10* (2013.01)

(21) Application number: **21728205.2**

(22) Date of filing: **21.05.2021**

(52) Cooperative Patent Classification (CPC):
**G06F 3/011; B25J 11/0005; G06N 3/044;
G06N 3/047; G06N 3/084; G06T 13/205;
G06T 13/40; G06V 10/82; G06V 40/28;
G10L 21/10;** G06N 3/082

(86) International application number:
**PCT/EP2021/063668**

(87) International publication number:
**WO 2021/234151 (25.11.2021 Gazette 2021/47)**

(54) **SPEECH-DRIVEN GESTURE SYNTHESIS**

SPRACHGESTEUERTE GESTENSYNTHESE

SYNTHÈSE DE GESTES COMMANDÉS PAR LA PAROLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2020 US 202063028698 P**

(43) Date of publication of application:
**29.03.2023 Bulletin 2023/13**

(73) Proprietor: **Motorica AB**
**113 57 Stockholm (SE)**

(72) Inventors:
• **ALEXANDERSON, Simon**
**118 58 Stockholm (SE)**
• **HENTER, Gustav**
**115 40 Stockholm (SE)**
• **BESKOW, Jonas**
**163 54 Spånga (SE)**
• **KUCHERENKO, Taras-Svitozar**
**114 17 Stockholm (SE)**

(74) Representative: **Kransell & Wennborg KB**
**P.O. Box 27834**
**115 93 Stockholm (SE)**

(56) References cited:
• **TARAS KUCHERENKO ET AL: "Gesticulator: A framework for semantically-aware speech-driven gesture generation", ARXIV.ORG, CORNELL UNIVERSITY LIBRARY, 201 OLIN LIBRARY CORNELL UNIVERSITY ITHACA, NY 14853, 25 January 2020 (2020-01-25), XP081585921,**
• **GUSTAV EJE HENTER ET AL: "MoGlow: Probabilistic and controllable motion synthesis using normalising flows", ARXIV.ORG, CORNELL UNIVERSITY LIBRARY, 201 OLIN LIBRARY CORNELL UNIVERSITY ITHACA, NY 14853, 16 May 2019 (2019-05-16), XP081557752,**
• **GEORGE PAPAMAKARIOS ET AL: "Normalizing Flows for Probabilistic Modeling and Inference", ARXIV.ORG, CORNELL UNIVERSITY LIBRARY, 201 OLIN LIBRARY CORNELL UNIVERSITY ITHACA, NY 14853, 5 December 2019 (2019-12-05), XP081546128,**

**Description**

**TECHNICAL FIELD**

The present disclosure relates to speech-driven gesture synthesis. More precisely, it proposes methods and devices for generating natural-looking gesture motions to accompany a speech signal.

**BACKGROUND**

The ability to automatically synthesize gestures is a key endeavor to provide compelling and relatable characters for many applications including animation, crowd simulation, virtual agents and social robots. This has however proved to be a particularly difficult problem. A major challenge is the lack of coherence in gesture production - the same speech utterance is usually accompanied by different gestures from speaker to speaker and time to time. Previous rule-based or deterministic methods fail to model this massive variation. Data-driven regression techniques minimizing a mean square error instead lead to "average" gestures that are unlikely to be seen in real life. In order to model realistic motion, there is a need to move from *deterministic* to *generative* models that are capable of modelling the full space of plausible motion.

For any motion synthesis it is desirable to control or modify the style of the output motion. In gesture synthesis, use cases include artistic control over gesturing style to match a desired personality or mood, or automatic control over, e.g., gesture or gaze direction. Research has found that motion statistics like average gesture velocity, spatial extent and height are correlated with the perception of personality traits [SN17, CN19, KG10].

**SUMMARY**

One objective of the present disclosure is to present a probabilistic generative model for speech-driven gesture synthesis. A particular objective is to present a model that allows the style of the output motion to be controlled or modified. A further particular objective is to allow gesture synthesis relating not only to upper-body gestures but being also generalizable to the full body, preferably with control over character location and direction. The gesture synthesis should furthermore require little or no manual labelling, and it should be non-deterministic in the sense that it provides unlimited gesture variation.

At least some of these objectives are achieved by the invention as defined by the independent claims. The dependent claims relate to advantageous embodiments of the invention.

In a first aspect of the invention, there is provided a method for providing a model suitable for speech-driven gesture synthesis. The method comprises: obtaining combined speech and gesture training data; forming conditioning data, said conditioning data comprising the speech training data; providing an autoregressive model of speaker pose sequences using normalizing flows, wherein each normalizing flow includes an invertible nonlinear transformation, whose parameters are determined by a neural network; and training the model on the basis of the gesture training data and the conditioning data. According to this aspect of the invention, the conditioning data includes, for each time instance, past and future data. Towards the end of a data set, dummy future data (e.g., silence) may be used.

The conditioning on future data supports the speech-driven gesture generation. More precisely, human gestures that co-occur with speech can be described as segmented into a preparation, a stroke and a retraction phase. In order to synchronize gestures with speech (e.g., perform beat gestures concurrently with prosodic emphasis in the acoustic features), the invention allows the model to prepare gestures in advance. The gestures can then be executed in synchrony with the speech. In particular, control inputs at a given time instance may contain not only the current speech features but also a window of surrounding speech features, including future speech features.

In some embodiments of the invention, the gesture training data is accompanied by a time series of one or more style-control parameters. The style-control parameters form part of the conditioning data. The time series of style-control parameters may be extracted from the gesture training data, or it may be obtained as manual or semi-automatic annotations associated with the gesture training data. The term "time series" does not presuppose a variation over time, but a style-control parameter may have a constant value throughout the gesture training data, i.e., conceptually the time series consists of repetitions of this value. This allows the style of the output motion to be controlled or modified. In particular, the style-control parameters may refer to hand height, hand speed, gesticulation radius, root motion (e.g., movements of a ground position of the body), correlation of right- and left-hand movements.

In some embodiments of the invention, the training data is augmented with processed gesture training data, such as right-left mirrored gesture training data. The processed gesture training data may be combined with the speech training data. The model may benefit from the further training made possible by such additional training data.

In various embodiments of the invention, the normalizing flows include, in addition to the invertible nonlinear transformation, one or more two learned affine transformations. In some embodiments of the invention, there are two or more learned affine transformations. The term "affine transformation" includes the special case of a linear transformation. The inventors have realized that the hitherto unknown use of normalizing flows with these characteristics in speech-driven gesture synthesis brings several advantages, and demonstrate this in the present disclosure.

In some embodiments of the invention, preprocessing is applied to the speech training data and/or the gesture training data. For example, gesture training data in the form of joint-angle data can be efficiently represented on exponential-map form; this may eliminate certain redundancies and/or while ensuring continuity or regularity.

In a second aspect of the invention, there is provided a method for speech-driven gesture synthesis using a model obtained by the method of any of the preceding claims. This method comprises generating a sequence of speaker poses from the model conditioned upon an obtained speech signal and optional further conditioning data.

The second aspect of the invention shares many of the effects and advantages of the first aspect, and it can be implemented with a corresponding degree of technical variation. Further, the sequence of speaker poses can be applied to a digital or physical character, whereby the intelligibility of the speech can be improved. In one use case, the speech signal is a safety-oriented message directed to members of the general public (e.g., passengers in a vehicle or vessel), which become more receptive or more attentive if the speech is accompanied by a rendering of natural-looking gestures. The communication can become richer or more efficient. As used herein, a "digital" (or virtual) character may be a representation of a human, humanoid, animal or imaginary character in the form of visual elements of a graphical user interface. A "physical" character may be a robot, a puppet or a similar artificial representation of a human, humanoid or animal character.

In some embodiments of the second aspect of the invention, the generation of the speaker poses is conditioned upon style-control parameters, as described above. The generation may also be preceded by preprocessing of the speech signal corresponding to preprocessing that was previously applied to the speech training data in the training phase.

Independent protection for devices suitable for performing the above methods is claimed. The invention further relates to a computer program containing instructions for causing a computer to carry out the above methods. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

## BRIEF DESCRIPTION OF THE DRAWINGS

Aspects and embodiments of the invention are now described, by way of example, with reference to the accompanying drawings, on which:

figures 1 and 2 are flowcharts of methods according to embodiments of the present invention;

figure 3 illustrates information flows in an autoregressive speech-driven gesture generation process, wherein $f$ represents the next-step distribution $p_{X_t|X_{t-\tau:t-1},c_t}$ which outputs the next pose $x_t$ and the unobserved LSTM state $h_{t+1}$ on the basis of the inputs $x_{t-2}$, $x_{t-1}$, $h_t$, $z_t$ and $c_t$;

figure 4 is a still image extracted from video used in the subjective evaluation;

figure 5 shows mean ratings from the perceptual experiments with 95% confidence intervals;

figure 6 illustrates effects and accuracy of style control, wherein subfigures 6a-6c refer to system MG-H, subfigures 6d-6f refer to system MG-V, subfigures 6g-6i refer to system MG-R, and subfigures 6j-6$\ell$ refer to system MG-S;

figure 6f' refers to a corrected version of the system MG-V; and

figure 7 contains snapshots of full-body gestures and body motion.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

## Related work

Gestures are essential to human non-verbal communication. McNeill [McN92] categorizes co-speech gestures into *iconics*, *metaphorics*, *beats*, *deictics* and *emblems.*

Synthesis of body motion and, in particular, gestures has recently shifted from rule-based systems - comprehensively reviewed in [WMK14] - towards data-driven approaches. Below, only data-driven methods will be discussed, since this line of research is continued.

**Data-driven human body-motion generation.** Several recent works have used neural networks to generate body- motion aspects such as *locomotion* [HHS17, HKS17, HAB19], *lip movements* [SSKS17] and *head motion* [GLM17, SB18]. A challenge in these domains is the large variation in the output given the same control. Different approaches have been employed to overcome this issue. For locomotion synthesis, studies have leveraged constraints from foot contacts to simplify the problem [HSK16, HKS17, HHS17]. Unfortunately, this is not applicable to speech-driven gestures. Closer to the domain of the present disclosure is speech-driven head-motion synthesis, where Greenwood et al. [GLM17] apply a conditional variational autoencoder (CVAE) while Sadoughi & Busso [SB18] use conditional generative adversarial networks, but these methods have not been evaluated for gesture synthesis.

**Deterministic and probabilistic gesture generation.** Like body motion in general, data-driven methods are on the rise in gesture generation. Levine et al. [LKTK10] used an intermediate state between speech and gestures and a hidden Markov model to learn the mapping. They selected motions from a fixed library, which limits the range of gestures their approach can generate. The present model, in contrast, is capable of generating unseen gestures.

Recently, Hasegawa et al. [HKS18] designed a speech-driven neural network capable of producing 3D motion sequences. Kucherenko et al. [KHH19] extended this work to incorporate representation learning for the motion, achieving smoother gestures as a result. Yoon et al. [YKJ19] meanwhile used neural-network sequence-to-sequence models on TED-talk data to map text transcriptions to 2D gestures. Some recent works used adversarial loss terms in their training to avoid mean-collapse, while still remaining deterministic [FNM19, GBK19]. In another recent work, Ahuja et al. [AMMS19] conditioned pose prediction not only on the audio of the agent, but also on the audio and pose of the interlocutor. All these methods produce the same gesticulation every time for a given input, while the method presented in this disclosure is probabilistic and can produce different gestures for the same input through random sampling.

Several researchers have applied probabilistic methods to gesture generation. For example, Bergmann & Kopp [BK09] applied a Bayesian decision network to learn a model for generating iconic gestures. Their approach is a hybrid between data-driven and rule- based methods because they have rules, but they learn them from data. Chiu & Marsella [CM11] took a regression approach: a network based on restricted Boltzmann machines (RBMs) was used to learn representations of arm gesture motion, and these representations were subsequently predicted based on prosodic speech- feature inputs by another network also based on RBMs. Later, Chiu et al. [CMM15] proposed a method to predict co-verbal gestures using a machine learning model which is a combination of a feed-forward neural network and Conditional Random Fields (CRFs). They limited themselves to a set of 12 discrete, pre-defined gestures. Sadoughi & Busso [SB19] used a probabilistic graphical model for mapping speech to gestures, but only experimented on three hand gestures and two head motions. The inventors believe that methods that learn and predict arbitrary movements, like the one proposed herein, represent a more flexible and scalable approach than the use of discrete and pre-defined gestures.

**Style control.** Control over animated motion can be exerted at different levels of abstraction. while animators and actors have explicit control over motion, it is often of interest to control higher-level properties that relate to how they are perceived. The relation between low-level motion and these properties has been extensively studied. Studies have uncovered a significant correlation between statistical properties of the motion (such as gesticulation height, velocity and spatial extent) and the perception of personality along the Big Five personality traits [Lip98, KG10, SN17] and emotion [NLK13, CN19]. In particular, Smith & Neff [SN17] modify statistical properties of existing gestures and demonstrate that these modifications create distinctly perceived personalities. Normoyle et al. [NLK13] used motion editing to identify links between motion statistics and the emotions and emotion intensities recognized by human observers.

Another line of research considers how to use machine learning to modify motion expression, based not on emotional categories or low-level statistics but on transferring stylistic properties from other recordings onto the target motion [HPP05, XWCH15, HHKK17, SCNW19]. This is known as *style transfer.* Style can also be controlled in some underlying parameter space. Aristidou et al. [AZS17] present a system to modify emotional expression (valence and arousal) of a given dance motion, while Brand & Hertzmann [BHoo] jointly synthesize both style and choreography without motion as an explicit input. In the present disclosure, the inventors similarly pursue the synthesis of novel motion with continuous and instantaneous control of expression. The approach of the present disclosure is agnostic to the level of abstraction of the desired control space, and it will be referred to broadly as *style control* although the reported experiments are limited to controlling mid-level statistical correlates of the motion.

**Probabilistic generative sequence models.** This sub-section reviews probabilistic models of complex sequence data, especially multimedia, to connect the preferred method of this disclosure - an adapted version of the causal approach presented in MoGlow [HAB19] - to related methodologies and applied work.

Early works on probabilistic human locomotion modelling investigated Gaussian process dynamical models [WFH08], along with their predecessors GP-LVMs [GMHP04, LWH12], as approaches that combined autoregressive aspects with a continuous-valued hidden state. In this disclosure, pose sequences will be modeled using a similarly autoregressive approach that incorporates recurrent neural networks (RNNs) for the hidden state. Unlike approaches like [GH00], where dynamics are linear if the hidden state is fixed, so-called "deep autoregression" [WTY18] is used, which has produced impressive results in diverse problems such as generating intonation [WTY18], locomotion [HAB19] and video [KBE20].

To escape inflexible distributional assumptions, variational autoencoders (VAEs) [RMW14, KW14] can generate samples from more complex distributions by incorporating an unobservable (latent) variable. Lately, generative adversarial networks (GANs) [GPAM14, G0016] - another deep-learning method using a la- tent variable - have been the state-of-the-art in, e.g., natural image generation [BDS19]. Especially notable for this disclosure are applications of GANs to synthesizing speech-driven head motion [SB18] and video of talking faces [VPP19,PAM18,PWP18]. While GANs have been found to be capable of producing highly convincing random samples, they are notoriously difficult to train [LKM18].

. In this disclosure, *normalizing flows* [KD18, PNR19] will be used for speech-driven gesture generation. Flows have gained interest since they have the same advantage as GANs of generating output by non-linearly transforming a latent noise variable, but by using a reversible neural network to do this it becomes possible to compute and maximize the likelihood of the training data, just like in classical probabilistic models like GMMs. Recent work has shown that normalizing flows successfully can generate complex data such as natural images [KD18, CBDJ19], audio waveforms [PVC19] and motion data [HAB19] with impressive quality. This disclosure builds on the latter work by adapting it to gesture generation.

## Method

This section introduces normalizing flows and how they can be used to model speech-driven gesticulation. Underlining signifies sequences, bold type vectors, and non-bold type scalars, including vector elements. Random variables and limits of summation are written in upper case, with lower case denoting specific distribution outcomes or indexing operations.

**Normalizing flows and Glow.** The idea of the motion models in this disclosure is to learn the multidimensional next-step distribution of poses $X$ in a stationary autoregressive model of pose sequences $\underline{x} = [x_1, ..., x_T]$ using normalizing flows [PNR19]. The latter are a general technique for representing a large variety of continuous-valued distributions p(x) in a manner that allows both efficient inference (probability computation) and efficient sampling from the distribution.

The idea is to describe a complicated distribution $X$ on $\mathbb{R}^D$ as an invertible nonlinear transformation $f \colon \mathbb{R}^D \to \mathbb{R}^D$ of a simple latent input distribution $Z$, here a standard normal distribution $Z \sim \mathcal{N}(0; I)$, a setup that resembles the generator structure used in many contemporary GANs. Normalizing flows then construct the transformation $f$ by chaining together a number of simpler invertible sub-transformations $f_n \colon \mathbb{R}^D \to \mathbb{R}^D$, colloquially called "flows", such that the overall transformation and its intermediate results can be written

$$x = f(z) = f_1\left(f_2(...f_N(z))\right)$$

$$z_n(x) = f_n^{-1}\left(...f_1^{-1}(x)\right),$$

where $z_0(x) = x$ and $z_N(x) = z$. The probability of any given datapoint **x** under the full distribution $X = f(Z)$ can then be using the chain rule, and depends on the prior probability $p_Z(f^1(x))$ and the log-determinants of the Jacobian matrices

$\partial \mathbf{z}_n/\partial \mathbf{z}_{n-1}$ of the sub-transformations $f_n^{-1}$ at $\mathbf{z}_n(\mathbf{x})$. One can use this straightforward computation to tune the transformations $f_n$ to maximise the exact log-likelihood of the training data using gradient-based methods.

The central design challenge of normalizing flows is to devise a parametric family of $f_n$-transformations that are flexible yet invertible, differentiable and have fast-to-compute Jacobian determinants. Recently, Kingma & Dhariwal [KD18] introduced a particular choice of $f_n^{-1}$ called *Glow*, and demonstrated impressive results for synthesizing facial images. Each flow in Glow consists of three sub-steps, of which two are learned affine transformations while the third step, called an affine coupling, is an invertible nonlinear transformation whose parameters are determined by a neural network. Each sub-step has a Jacobian log determinant that is a simple sum of D terms that readily arise during the computations.

**MoGlow for gesture generation.** MoGlow [HAB19] extends Glow to the problem of modelling and generating motion, by using Glow to describe the next-step distribution in an autoregressive model. It also adds control over the output and uses recurrent neural networks for long-term memory across time. To make the Glow transformations conditional on other information, such as the previous poses $\mathbf{x}_{t-\tau:t-1}$ and a current control signal $\mathbf{c}_t$, MoGlow simply feeds this additional conditioning information into all neural networks in the system (i.e., the affine coupling layers), similar to [PVC19]. The resulting autoregressive sequence-to-sequence model can be written

$$p_{\underline{X}|\underline{c}}(\underline{x}|\underline{c}) = p_{X_{1:\tau}}(x_{1:\tau}) \prod_{t=\tau+1}^{T} p_{X_t|X_{t-\tau:t-1},c_t}(x_t|x_{t-\tau:t-1}, c_t h_t)$$

$$h_{t+1} = g(x_{t-\tau:t-1}, c_t, h_t).$$

Stationarity is assumed, meaning that $p_{X_t|X_{t-\tau:t-1},c_t}$ and $g$ do not depend on t. The second equation represents the (hidden) LSTM-state evolution. In this disclosure, a sequence of neutral (mean) poses for the initial motion $\mathbf{x}_{1:\tau}$ will be used, although many other choices are possible. For speech-driven gesture generation, the control information $\mathbf{c}_t$ will be a sub-sequence excerpted from an acoustic feature sequence $\underline{a} = [a_1, ..., a_T]$ time-aligned with x. [HAB19] found it necessary to apply data dropout to the poses in the autoregressive inputs $x_{t-\tau:t-1}$ to the next-step distribution, as models learned without such dropout were found not to respect the other control inputs $\mathbf{c}_t$.

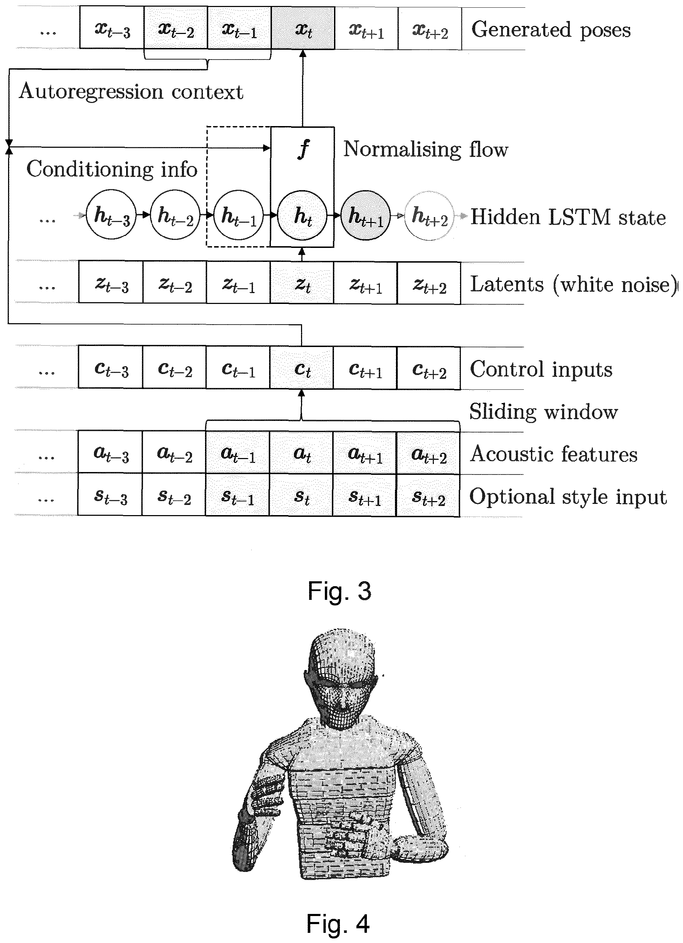

While the original MoGlow focused on locomotion control with zero algorithmic latency, this is not a good match for speech-driven gesture generation. Human gestures that co-occur with speech are segmented into preparation, stroke, and a retraction phase. In order to synchronize gestures with speech (e.g., perform beat-gestures concurrently with prosodic emphasis in the acoustic features), the gestures must be prepared in advance. For this reason, the control inputs $\mathbf{c}_t$ at time instance t contain not only the current speech features $\mathbf{a}_t$ but also a window of surrounding speech features $\mathbf{a}_{t-\tau:t+r}$, where the lookahead r is set in such manner that a sufficient amount of future information can be taken into account. Subjectively, the inventors found one second to be sufficient, but not 0.5 s. The full motion-generation procedure is visualized in figure 3, where $f$ represents the next-step distribution $p_{X_t|X_{t-\tau:t-1},c_t}$ which outputs the next pose $x_t$ and the unobserved LSTM state $h_{t+1}$ on the basis of the inputs $x_{t-2}$, $x_{t-1}$, $h_t$, $z_t$ and $c_t$.

In addition to letting gestures depend on speech, one may wish to exert further control over the style or other properties of the gesticulation. It is proposed according to the present invention to add such style-control input values $\mathbf{s}_t$ alongside the speech-feature inputs $\mathbf{a}_t$, as seen in figure 3, in order to train a style-controllable gesture-generation system. By appending control vectors to each time frame, control inputs are allowed to change over time with the same granularity as the output motion. In the next section, a few scalar control schemes that modify meaningful properties of the gesticulation such as gesture radius and height will be explored.

## System setup and training

**Training-data processing.** For the experiments, the system was trained and tested on the Trinity Gesture Dataset (available at trinityspeechgesture.scss.tcd.ie), which is a large database of joint speech and gestures collected by Ferstl et al. [FM18]. The data consists of 244 minutes of motion capture and audio of one male actor speaking spontaneously on different topics. The actor's movements were captured with a 20-camera Vicon system and solved to a skeleton with 69 joints. The actor moved freely around the capture area, so gestures were generally performed while shifting stance or taking a few steps back and forth. The spontaneous setting caused a large number of speech disfluencies and fillers, but there are remarkably few silent pauses in the data despite its spontaneous nature.

To process the motion data, the inventors initially synchronized audio and video and downsampled all recordings to a consistent rate of 60 fps. The inventors then rotated the motion-capture joint angles to be expressed relative to a T-pose and transformed them to an exponential map representation, to obtain features without discontinuities. They then removed all the root- and lower-body motion, keeping only 15 upper-body joints, from the first spine joint up to and including the hands and head. Finger motion was removed due to poor data quality.

The audio signal was transformed to 27-channel mel-frequency power spectrograms. (Experimented with MFCC features were also carried out, however, without finding any notable differences in training loss or subjective quality.) To obtain inputs and outputs, the inventors further downsampled the data to three times as much material at 20 fps (using frames $t = 0,3,6, ...$, and $t = 1,4,7, ...$, and $t = 2,5,8, ...$) and sliced it into 80 frame-long (4 s) time-series excerpts with 50% (2 s) overlap. This resulted in 20,665 samples of data, each with $80 \times 27$ speech features as input and $80 \times 45$ joint angle features as output. One session, *NaturalTalking_ooy,* was held out from training and cut into two parts: the first 4000 frames (200 s) for validation and network-tuning, and the last 8000 frames (400 s) for system evaluation, cut into 19 non-overlapping segments of equal length.

Finally, the inventors augmented the data with a mirrored version of the joint angles together with the unaltered speech, thus increasing the available amount of gesture training data.

**Style-control data.** In order to demonstrate style control, the inventors focused on style-correlated aspects of the gesticulation that can be computed from pose sequences alone, without manual annotation. Specifically, since hand motion is central to speech-driven gestures, the inventors studied control over various aspects of the motion of the wrist joints (whose positions were computed, in hip-centric coordinates, using forward kinematics). This joint position data was then used to calculate the hand height (right hand only), the hand speed (sum of left and right hands) and the gesticulation radius (the sum of the hand distances to the up-axis through the root node). Each of these three quantities were then averaged using a four-second sliding window and the resulting, smoothed time-series used as an additional input $\mathbf{s}_t$ to train style-controllable model as in the subsection "Proposed systems and baselines". In addition, the inventors also computed the correlation between right and left hand movements (mirrored along the x-axis) across 4 s sliding windows, to enable learning of control over the symmetry of generated gestures.

The inventors noted that the style-control approach of the present disclosure is highly general: If it is possible to associate each frame in the data with a feature or style vector (which may vary for each time t or be constant per speaker, recording, etc.), this can be used to train a system with style input to the synthesis; the four lower-level style attributes discussed here are only intended as examples.

**Network tuning and training.** Starting from the hyperparameters of MoGlow for locomotion [HAB19], the inventors first tuned model complexity (i.e., the number of flow-steps $K$ and units $H$ in the affine coupling LSTM layers), followed by the data-dropout probability and finally the learning rate. Model-complexity parameters were tuned with grid search, where $K = 16$ and $H = 800$ were chosen based on training-data likelihood and speed of computation. (The inventors were not able to tune the model using subjective impressions, since the differences between similar systems were too small to be noticeable). The Adam optimizer [KB15] with Noam learning rate decay was used, wherein the maximum and minimum learning rate was tuned by incrementally scaling up the original MoGlow values by 1.5 until no improvement was found. The final values used were $lr_{max} = 10 \cdot lr_{min} = 1.5 \cdot 10^{-3}$. All proposed models (during hyperparameter tuning and in the final evaluation) were trained for 160,000 optimization steps.

Unlike the network in [HAB19], the systems proposed herein take both past and future conditioning information into account. Specifically, the present models take $\tau = 5$ historic frames (0.25 s) of concatenated joint poses and speech features, and 20 future frames (1 s) of speech as input when generating the next frame. The short context history is possible since older information can be propagated forward through the RNN. As described above, the 20-frame acoustic lookahead was necessary to for the model to prepare gestures so that they could be executed in synchrony with the speech.

As also stated in the previous section, the use of data dropout prevents information from past poses from overriding other input signals. To tune the dropout rate for the poses in the autoregressive context $\mathbf{x}_{t-\tau:t-1}$, the inventors exploited the fact that the accuracy of the style control can be evaluated objectively, since the realized control-parameter trajectories of any given gesture can be computed from sampled motion. Using the height of the right hand as control parameter, the inventors trained five separate networks with data-dropout rates from 0.0 to 0.8 increasing in steps of 0.2. By then providing the trained systems with a constant control input and evaluating the resulting (four-second average) right-hand height in sampled gestures, the inventors picked the lowest dropout rate - 0.4 - where the sampled gestures obeyed the control over many random samples. This dropout rate was applied for all subsequent MoGlow-based systems, since it was observed that not having any data dropout diminished the impact of speech control.

**Proposed systems and baselines.** Following parameter tuning, the inventors trained a total of five different MoGlow-based systems: one system, denoted MG, conditioned only on speech, along with four systems that also allowed style control. Based on the subsection "Style-control data", these latter systems enabled control over the four-second average of either the right-hand hand height (system MG-H), the hand speed (MG-V, for velocity), the gesture radius (MG-R), or the degree of gesture symmetry (MG-S). All these systems used the same hyperparameters identified in the preceding subsection.

To assess the quality of the proposed approach, the inventors compared the proposed systems against a number of toplines and baselines. As a topline, the inventors used held-out ground-truth gestures from the motion captured database (condition GT). A further evaluation was carried out, targeting the same ground-truth gestures but with mismatched speech audio taken from elsewhere in the database (condition MM). This condition should also exhibit fully natural motion but should rate relatively lower on appropriateness of the gesticulation for the speech audio. The inventors also trained and compared three baseline motion-generation systems taking the same speech-feature representation as input: A simple unidirectional LSTM network (LSTM) [HS97] with 1 layer and 350 nodes; an implementation of the conditional variation autoencoder (CVAE) for head motion presented in [GLN17] (1 layer and 350 nodes in each BLSTM, 2 latent dimensions); and the audio-to-representation-to-pose system (ARP) recently proposed in [KHH19]. The latter maps speech audio to a (here) 40D motion representation space learned using denoising autoencoders, and then decodes the predicted representations to poses. Unlike MG, output from the three synthetic baselines required post-processing for smoothness. Details on the different systems trained in this disclosure can be found in Table 1 and 2, which provide an overview of the automatic gesture-generation systems (baselines, proposed and full-body) evaluated in this disclosure.

| Table 1 | | | | | | | | |
|---------|---|---|---|---|---|---|---|---|
| System | Probabilistic? | Context frames | Hidden state | Pose params | Training loss | Training epoch | Time (GPUs) | Log-like. |
| LSTM | yes | - | LSTM | 1M | MSE | 50 | 1 h (4) | N/A |
| CVAE | partially | - | BLSTM | 4M | MSE+KLD | 50 | 12 h (4) | N/A |
| ARP | yes | 61 | GRU | 0.5M | MSE | 300 | 10 h (1) | N/A |
| MG | yes | 26 | LSTM | 172M | Log-likel. | 387 | 37 h (1) | 266 |
| MG-H | yes | 26 | LSTM | 173M | Log-likel. | 387 | 38 h (1) | 267 |
| MG-V | yes | 26 | LSTM | 173M | Log-likel. | 387 | 38 h (1) | 264 |
| MG-R | yes | 26 | LSTM | 173M | Log-likel. | 387 | 38 h (1) | 270 |
| MG-S | yes | 26 | LSTM | 173M | Log-likel. | 387 | 38 h (1) | 307 |
| FB-U | yes | 26 | LSTM | 86M | Log-likel. | 702 | 16 h (1) | 320 |
| FB-C | yes | 26 | LSTM | 88M | Log-likel. | 702 | 16 h (1) | 303 |

In Table 2, perceptual ratings of the style-controlled systems refer to the mid (i.e., 50%-level) control-input setting.

| Table 2 | | |
|---------|---|---|
| System | Mean rating | |
| | Human-likeness | Appropriateness |
| LSTM | 3.36±0.13 | 3.31±0.13 |
| CVAE | 3.33±0.12 | 3.25±0.13 |
| ARP | 3.51±0.14 | 3.35±0.13 |
| MG | 3-69±0.13 | 3.66±0.14 |
| MG-H | 3.63±0.23 | N/A |
| MG-V | 3.62±0.23 | N/A |
| MG-R | 3.72±0.26 | N/A |
| MG-S | 3.61±0.25 | N/A |
| FB-U | 3.42±0.16 | N/A |
| FB-C | 3.76±0.14 | N/A |

As a bottom line, the inventors created a small set of obviously unnatural gesticulation videos (condition BL), by synthesizing output from the systems at an early stage of training. These videos (available, with all other videos seen by raters, in the supplement) served as lower anchors for the rating scale, and also provided a quality measure for filtering out spammers and highly inattentive raters.

**Full-body synthesis.** For simultaneous synthesis of full-body gesture and stance, the lower-body and hip joints were included and the motion was expressed in a floor-level coordinate system that followed the character's position and direction. Following [HSK16, HAB19], three features for the root translation and rotation were extracted, namely the frame-wise delta x- and z-translations together with the delta y-rotation of the floor-projected, smoothed hip pose. The smoothing was set to 0.25 s for translation and 0.5 s for rotation. In this setting the inventors retargeted the data to a slightly different skeleton with fewer spine and neck joints and also re-tuned the network parameters, yielding the following values: $K = 16$, $H = 512$, $lr_{max} = 2 \cdot 10^{-3}$, $lr_{min} = 5 \cdot 10^{-4}$. To speed up training times also intermediate frames were discarded from downsampling, and the network was trained for 80,000 steps.

Two full-body systems were trained: one (FB-U, for *uncontrolled*) in which all motion (joint angles and root translation/rotation) was synthesized from speech, and one (FB-C, for *controlled*) synthesizing only body poses while treating the three root-motion features as additional control inputs. While the former system replicates stepping movements and pose shifts from the original data in an uncontrolled manner, the latter gives explicit control over character location and direction. This may be important in many scenarios, such as facing different interlocutors, portraying restlessness, or simply making the character stand still.

## Evaluation

In this section, the experiments used to evaluate the proposed approach to motion generation are described. It is emphasized that objective evaluation of gesture synthesis is generally difficult; many plausible motion candidates exist for a fixed speech input, so a direct comparison against held-out natural motion recordings is not guaranteed to be meaningful. Instead, the evaluation was based on an extensive subjective evaluation against the toplines and baselines described in subsection "Proposed systems and baselines". Three perceptual evaluation studies were performed, looking at *human-likeness and appropriateness of motion, effects of style control and full-body synthesis* (simultaneous gesturing and walking). To enable meaningful cross-comparisons, the human-likeness, appropriateness and style-control conditions were evaluated in the same user study, while the full-body synthesis was evaluated in a separate study.

All perceptual studies were carried out using online experiments on the Figure Eight crowdworker platform, with the highest-quality contributor setting (allowing only the highest-accuracy contributors) and country origin set to English-speaking countries (U.S., Canada, U.K., Ireland, Australia and New Zealand). In all experiments, raters were instructed to watch and listen to 18-second video clips of a gesticulating figure as in figure 4, and rate them on five-point scales according to given scoring criteria. Since finger motion was not included in the study due to insufficient capture accuracy in the training data, the figure was provided with lightly cupped hands, static after the wrist, in the generated videos.

**Evaluation of human-likeness and appropriateness.** In this experiment the goal was to compare two aspects of the systems: 1) to what degree the generated motion looked like the motion of a real human, and 2) to what degree the gestures matched the speech. Six conditions were included: the proposed MG systems, the three baseline systems LSTM, CVAE and ARP, and finally GT (ground truth recordings). 16 BL (bottom-line) examples were also included, to filter out unreliable raters. Raters were instructed to wear headphones and sit in a quiet environment. Prior to the start of the rating, subjects were trained by viewing example motion videos from the different conditions evaluated, as well as some of the bottom line examples.

Each stimulus was assessed by 40 independent crowdworkers, who were asked to rate the videos on a scale from 1 to 5 with respect to human-likeness ("to *what extent does the motion of the character look like the motion of a real human being")* and appropriateness (*"to what extent does the motion match the audio"*), 5 being best. Other studies have found that many crowdworkers do not give gesture-rating tasks the attention they require [YKJ19,JKEB19,KJvW20]. As quality assurance, strict rejection criteria were employed: (a) any rater that had given any of the bottom-line (BL) examples a human-likeness rating above 3 *or* (b) had given a GT stimulus a rating of 1 on either human-likeness or appropriateness were excluded from the study. Also, (c) any ratings where the total time taken was less than 22 s (length of video + 4 s) or greater than 1200 s were discarded. Together, this removed 63% of the judgements. Out of these, 80% matched criterion (a), 29% matched (b) and 19% matched (c) (some judgements matched multiple rejection criteria). For the dominant rejection criterion (a), the distribution of responses for the BL examples was as follows: 1 (37%), 2 (13%), 3 (12%), 4 (21%), 5 (15%). This distribution has two peaks: the most common response was clearly 1, indicating that BL stimuli are indeed perceived as unnatural, but the high number of 4 and 5 ratings indicate that some subjects most likely are not making a sincere effort or are not understanding the task correctly, and should be discarded.

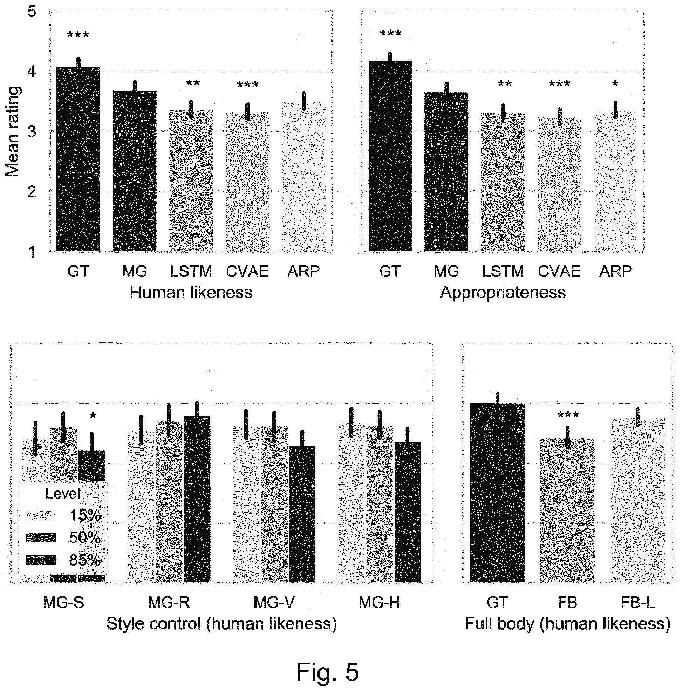

Mean ratings from the study are shown in figure 5 and Table 2. In figure 5, the asterisks indicate significant effects (*: $p < 0.05$, **: $p < 0.01$, ***: $p < 0.001$); for the three leftmost graphs comparisons are made against MG and for the rightmost graph against GT. The human-likeness for GT and MG were 4.08±0.12 and 3.58±0.14, respectively, and for appropriateness 4.18±0.12 and 3.53±0.13. A one-way ANOVA revealed main effects of *human-likeness* and *appropriateness*, and a post-hoc Tukey multiple comparison test identified a significant difference between GT and all other conditions. MG was rated significantly above CVAE ($p < 0.001$) and LSTM ($p < 0.005$) on *human-likeness* and above CVAE ($p < 0.001$), LSTM ($p < 0.005$) and ARP ($p < 0.02$) on *appropriateness.*

Evaluation of style control. The style control is evaluated next, both subjectively and objectively. The subjective evaluation was carried out in the same experiment described in the previous section, using the same number of raters and rater-exclusion criteria. Five different systems from subsection "Proposed systems and baselines" were assessed, namely the proposed MG system without style control, MG-H (hand height control), MG-V (velocity control), MG-R (gesture radius control) and MG-S (gesture symmetry control). For each of the four style-control systems, three groups of five animations were generated, where each group had a constant low, mid or high value of the control-input, defined by the $15^{th}$, $50^{th}$ and $85^{th}$ percentile of the control signal values in the training data. This yielded a total of 60 controlled video stimuli.

Mean values for the *human-likeness* rating for the different systems can be seen in the third plot in figure 5 and Table 2. Style control at different levels appears to have had a minor effect on the perceived naturalness of the systems. The only significant difference between MG and the style-controlled variants was for MG-S in the 85% setting ($p < 0.05$).

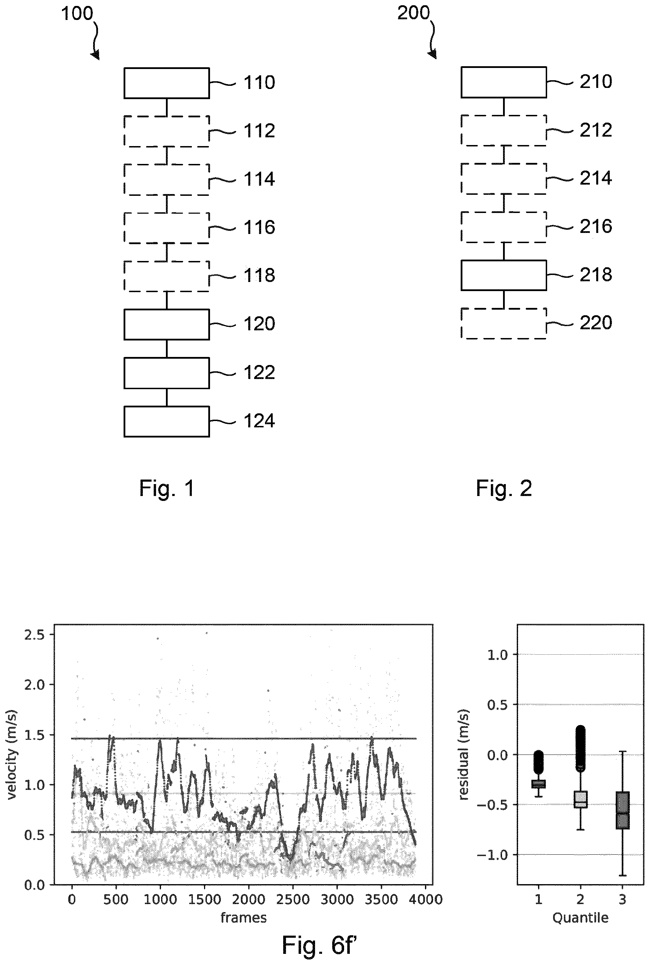

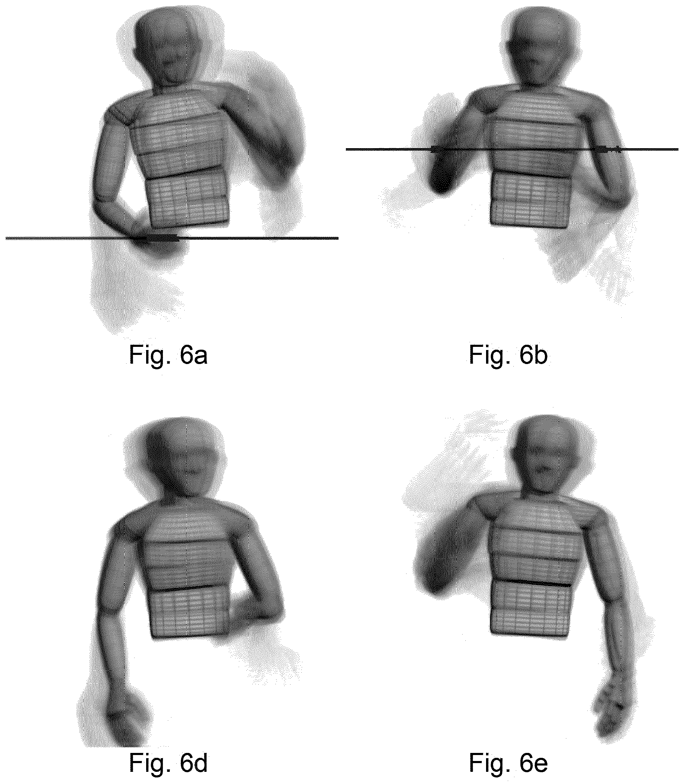

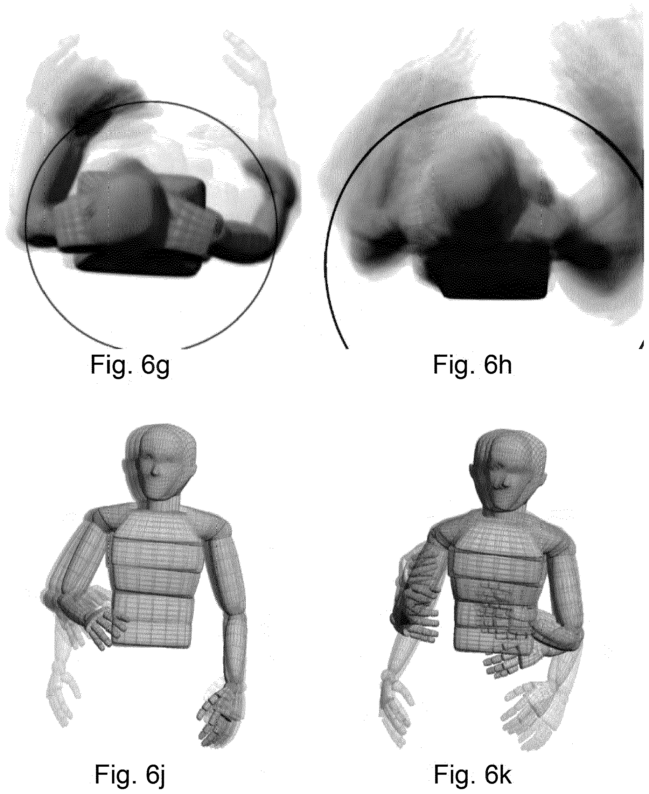

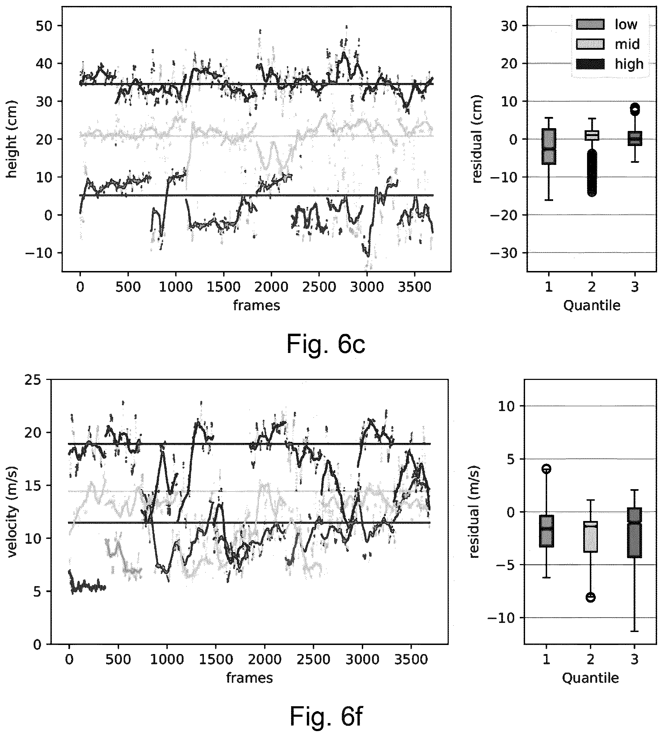

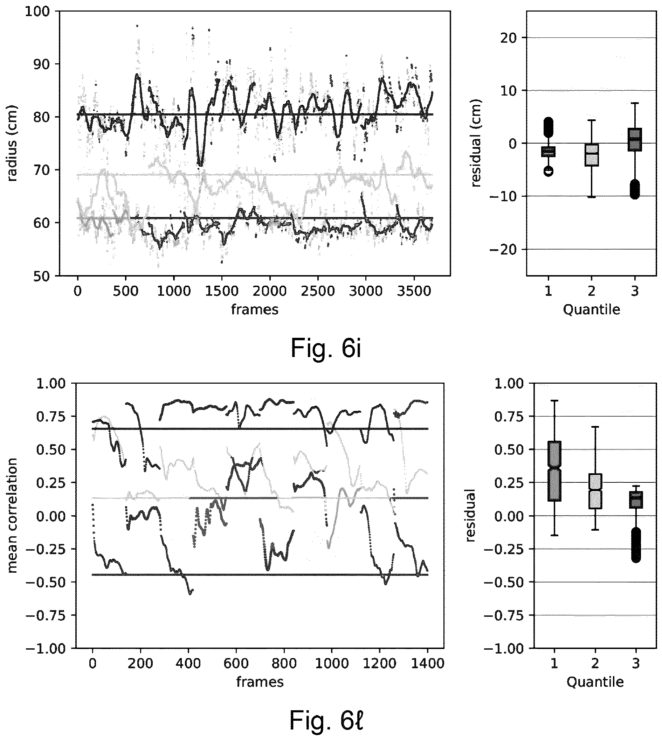

Figure 6 illustrates the effect of style control on the motion generated by the proposed systems, with one style-controlled system in each row (M-H, MG-V, MG-R and MG-S). Sub-figures a, b, d, e, g, h, j and k visualize the effect of low (first column) and high (second column) control by superimposing motion frames from short excerpts of the generated output. These are average images, each taken over 20-s excerpts with constant low or high control input. Subfigures j and k instead uses a few onion-skinned snapshots to convey a better impression of symmetry. The constant control-values for MG-H and MG-R are shown as solid curves. The images suggest that the control input in all cases has affected the generated motion in the desired direction, with the effect being most visually obvious for MG-H and MG-R.

In figure 6, further, subfigures c, f, f', i and $\ell$ visualize - over time, and statistically - how the sampled output motion from the four models adheres to the given control signal for three control-signal input levels as regards height, velocity, radius and mean correlation, respectively. The left boxplots show the control input (flat lines) and the corresponding instantaneous and smooth control values of the output. The three different shades of the curves represent low ($15^{th}$ percentile), mid ($50^{th}$ percentile) and high ($85^{th}$ percentile) control-input values. In each of subfigures c, f, f', i and $\ell$, the left boxplot shows time series ranging over 3700 frames of sampled motion and indicates instantaneous values, four-second smoothed values (extracted the same way as the control signal) and the control (line). The right boxplot shows the distribution of the residual between the input signal and the corresponding realized control and uses the same y-axis scale as time series to facilitate comparison. The subfigure 6f was obtained using a corrected and retrained version of the MG-V system. The inventors realized in March 2020 that the software code of the MG-V system incorrectly computed finite differences between two different coordinates in the same time frame, instead of the same coordinates across time as intended. The result is that the original MG-V system did not control average hand-motion speed, but instead forced the average position of affected joints towards an oblique surface determined by the control. From subfigure 6f it appears that the control has the intended effect of changing motion speed.

The curves are ordered from bottom to top, as expected. As an indication of control precision, the boxes showing the interquartile ranges of the realized control are mostly narrower than the separation between the constant control levels. The control of gesture radius is particularly distinct in this regard, with narrow boxes compared to the offset between the control levels. Both hand height and symmetry control demonstrate an intriguing behavior where the observed variance around the style control input value is significantly greater for the low control input than at the other two levels. The inventors hypothesize this might be due to discrepancies between the control input and the contexts in which that control input value occurs in the training data. For instance, long stretches of low hand height are rare in the data, as low hand heights often are associated with wide swinging motions. Sustained periods of negative correlation between the left and right hand are similarly uncommon in the training material. As a consequence, feeding in a low control input produces motion with inherently greater variability, inflating the boxes in the boxplots.

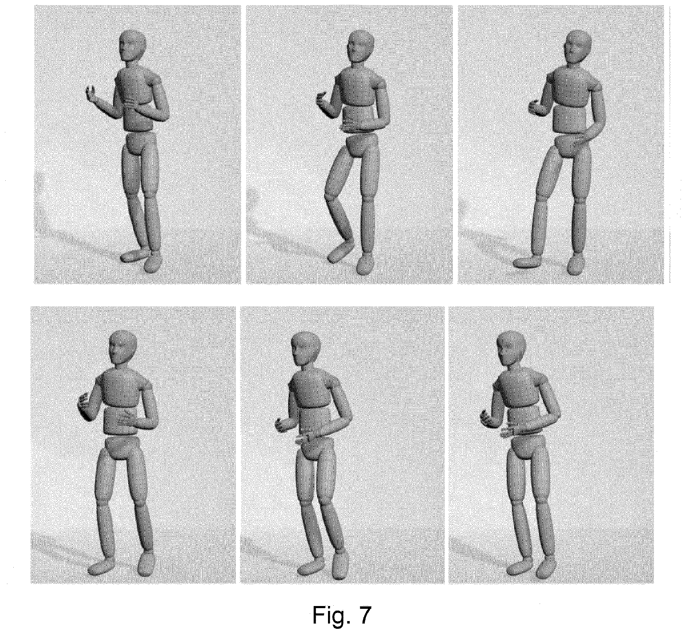

**Evaluation of full-body gestures.** The subjective evaluation of the full-body synthesis contained three conditions, GT and the two MoGlow systems from subsection "Full-body synthesis": FB-U (full-body motion from speech only) and FB-C (full-body motion also with controlled location and direction). 19 animations (cf. figure 7) from each condition were used in the evaluation, together with 16 BL (bottom line) animations used for quality control purposes like before. Subjects were asked to rate the animations on a scale from 1 to 5 for *human-likeness* (*"to what extent does the motion of the talking character look like the motion of a real human being?"*).

Twenty ratings were obtained for each stimulus. Raters who scored any of the BL animations a above 3 were excluded from the study, removing 44% of the judgements. Results can be seen in the lower right pane of figure 5. Full-body GT received a mean rating of 4.005, FB-C 3.764 and FB-U 3.421. One-way ANOVA and a post-hoc Tukey multiple comparison test found a significant difference between GT and FB-U ($p < 0.001$), but not between GT and FB-C.

**Discussion.** The results confirm that the inventors have successfully achieved their goal of enabling probabilistic speech-driven gesture generation that permits optional style control and compares favorably against previous methods in the literature. However, while evaluations found MG gesticulation to be quite human-like and a reasonable match for the speech, a subjective impression remained (reinforced by the user study) that the generated gestures were not as vivid or diverse as the original motion-capture recordings. The inventors believe that this indicates overfitting. During network tuning, it was found that providing the right model complexity (especially $K$ and $H$) was important for balancing stable gesture generation and perceived gesture quality. While underfitted models showed a great range of different behaviours (many of them unnatural) and sometimes got stuck in unnatural poses, overfitted models exhibited a reduced range of gestures, but those displayed were stable and followed the rhythm of the speech. The inventors thus opted for a more stable gesture synthesis, with less vivid arm movements in the first experiment. The modified training scheme for the FB models was instituted as an attempt to strike a different balance between human-likeness and liveliness.

The speaker's high gesture rate and low quantity of pauses may have affected the study in several ways. On the one hand, it may have been beneficial for learning, as it gave the systems a large number of gestures to train on. On the other hand, it may have complicated the evaluation, where a speaker with more pauses and slower speaking rate might have been easier to assess.

## Particular embodiments of the invention

Figure 1 is a flowchart of a method 100 for providing a model suitable for speech-driven gesture synthesis. The method 100 may be implemented by a device equipped with memory and processing circuitry including one or more processor cores. The device may, for example, be a general-purpose computer with input/output capabilities allowing it to obtain training data (e.g., as a data file) and make the trained model available for use in gesture synthesis. Alternatively, the device is a networked (or cloud) processing resource. The model may either remain on the device and be put to use there for gesture synthesis, or it may be exported in a transferable format for use on a different machine.

The method 100 begins with a step of obtaining no combined speech and gesture training data. The speech data may be an audio signal. The gesture training data may be based on a sequence of video frames captured by one or more video cameras. The gesture training data may be structured data including motion-capture data, or joint-angle data in particular. The speech and gesture training data are "combined" in the sense they contain timing indicators or other metadata allowing them to be aligned in time. In the example described above, the speech and gesture data are synchronized and downsampled to a consistent rate of 60 frames per second.

In an optional step 112, the speech training data is preprocessed to obtain a power spectrogram. Such preprocessing eliminates phase information, yet provides a robust basis for the model training to follow. For example, the power spectrogram may be a mel-frequency power spectrogram.

In a further optional step 114, the gesture training data is preprocessed. The preprocessing 114 may convert the gesture training data into an exponential-map representation. Alternatively or additionally, the preprocessing 114 may include time synchronization, downsampling, coordinate conversion such as a conversion to T-pose coordinates.

In a further optional step 116, additional training data is provided by combining the speech training data with processed gesture training data. The gesture training data may be processed by right-left mirroring. The additional training data may be described as a mirrored version of the originally obtained gesture data (joint angles) together with the unaltered speech.

In a still further optional step 118, a time series of one or more style-control parameters is obtained from the gesture training data. Style-control parameters in this sense may be, for example, hand height, hand speed, gesticulation radius, root motion, correlation of right- and left-hand movement. The time series of style-control parameters may be extracted from the gesture training data, or it may be obtained as manual or semi-automatic annotations associated with the gesture training data. This allows the style of the output motion to be controlled or modified according to the user's wishes.

In a next step 120 of the method 100, the (optionally preprocessed) speech training data (acoustic features $\boldsymbol{a}$) is used as conditioning data (control inputs c). In some embodiments of the invention, the style-control parameters s are also included in the conditioning data. As illustrated by figure 3, the conditioning data includes not only past data but also future data. The segmentation in figure 3 is for exemplifying purposes. To quantify, it is recalled that, if the conditioning data includes a window of speech features $\boldsymbol{a}_{t-r:t+r}$, then a lookahead r of between 0.5 and 1.0 s has been found to be suitable.

In a next step 122, after the conditioning data has been formed, an autoregressive model of speaker pose sequences is provided using normalizing flows. The model may further be stationary. Each normalizing flow includes an invertible nonlinear transformation, whose parameters are determined by a neural network, and optionally it includes one, two or more learned affine transformations. These constituents of a normalizing flow may be referred to as substeps. The neural network may be, or include, at least one recurrent neural network (RNN), at least one long short-term memory (LSTM) unit and/or at least one gated recurrent unit (GRU).

The method 100 concludes with a training step 124, in which the model is trained on the basis of the gesture training data and the conditioning data. A nonzero dropout rate may be applied to the neural network, or its inputs, or both. After a sufficient quantity of training has been completed, the model is ready for use in gesture synthesis. The model may be included in a gesture-generation system.

Figure 2 is a flowchart of a method 200 for speech-driven gesture synthesis. The method 200 may use a model which was obtained by an execution of the method 100 illustrated in figure 1. Alternatively, the method 200 may use a probabilistic model with equivalent properties that was obtained by a different process. The properties include that the model shall be based on normalizing flows, shall relate to speaker pose sequences and be conditioned upon at least past and future conditioning data, wherein the conditioning data includes speech data. The method 200 may be executed online (e.g., using a live speech signal) or offline.

In an initial step 210 of the method 200, a speech signal is obtained. Without departing from the scope of the present disclosure, the speech signal may be an audio signal with recorded speech, or the audio signal may contain speech synthesized from text.

In an optional next step 212, the speech signal is preprocessed. The preprocessing may correspond to any preprocessing that was applied to the speech training data when the model was trained. As explained in connection with step 112 above, the preprocessing 212 may return a power spectrogram.

In a further optional step 214, values of one or more style-control parameters are obtained. This corresponds to the case where the trained model is conditioned upon style-control parameters as well.

In a further optional step 216, as deemed necessary, time-aligned segmentations of the speech signal and the style-control parameter values are provided. This allows execution in discrete time, as schematically illustrated in figure 3. It is noted that commonly practiced techniques for audio-signal segmentation, in which sequentially overlapping windowing functions are utilized, are understood to produce segmentations in the sense of the present disclosure.

The execution of the method 200 then goes on to a step 218 of generating a sequence of speaker poses from the system's model conditioned upon the conditioning data, i.e., at least conditioned upon the speech signal. The generating of a speaker pose may be characterized as a sampling from a probability distribution described by the normalizing flows of the trained model. The perceived quality of the output can sometimes be improved by tuning (making small adjustments to) the standard deviation of the underlying probability distribution on which the normalizing flows act; this may mean that the sampling proceeds under slightly different conditions than the training.

The sequence of speaker poses thus obtained may subsequently be applied 220 to a digital or physical character. It may be rendered as a video sequence to be played back on a computer. Alternatively, the sequence of speaker poses may be transformed into control signals to be applied to the actuators of a robot representing the speaker.

## Further embodiments of the invention

A system and method to generate natural looking gesture motions accompanying speech from audio utterances are disclosed herein. The system is trained using synchronized motion and speech inputs at various speech levels, such as sentences, phrases, words, phonemes, sub-phonemes, etc., depending upon the available data, and the motion type or body part being modeled. By using normalizing flows to construct flexible probability distributions and a reversible, recurrent deep neural network, the likelihood of the training data is maximized. To achieve said maximization, gradient ascent methods may be utilized. The system becomes capable of randomly generating/synthesizing gestures for body parts based on speech input. These gestures are then applied to digital or physical humanoid characters within fields such as animation, crowd simulation, virtual agents and social robots. The system also allows to control the gesturing style, such as the average gesture speed, height, radius and symmetry. The style is specified by additional continuous input parameters provided to the system.

A method of training a neural network for speech to motion synthesis may comprise the following steps: collecting a dataset of digital speech audio paired with motion captured motion data from a database; applying one or more signal processing algorithms to the paired digital speech audio and motion data including synchronizing the data sources, exponential map representation of the motion data and audio feature extraction algorithms to create modified digital sets of speech audio and motion data features; creating a first training set comprising the modified sets of digital speech audio and motion data; training the neural network using both past and future conditioning information in the training sets.

A system for generating gesture motion animations from an arbitrary speech input may comprise the following components: a device for training one or more probabilistic motion models from one or more audio, video or motion capture training signals comprising synchronized speech and body part motions; wherein training each motion model further comprises learning a probability distribution over plausible body poses, conditioned on a) a sequence of previous body poses, b) a sequence of past and future speech features and c) an optional set of style features (such as the average speed, radius, height and symmetry of the desired gestures, wherein the motion model is using normalizing flows to model the probability distribution and utilizes a recurrent neutral network (RNN) to store long term memory of previous states; a device for receiving an arbitrary speech and data input having one or more "style control" associated with one or more portions of the arbitrary speech input; a device for extracting a set of acoustic features and semantic information from the arbitrary speech input; a device for predicting a sequence of the animation units to construct an animation trajectory which probabilistically explains the arbitrary speech input, by applying one or more of the set of motion models to the set of acoustic features and semantic information extracted from the arbitrary speech input; a device for generating an animation sequence from the predicted sequence of the animation units; a device for constructing an audio/video animation of an avatar, said animation including the arbitrary speech input synchronized to the animation sequence; and a device for applying and synchronizing the said animations including the arbitrary speech input to a social robot.

The present disclosure presents a deep-learning-based system for automatic synthesis of co-speech gestures from speech input. The system is probabilistic, meaning it describes the entire distribution of likely gesture motions, and not only the mean pose or another single realization. User studies find that this system rated above several baselines from prior literature both in terms of human-likeness and on the appropriateness of the gestures for the given speech. It has furthermore been demonstrated that the approach can be extended to exert various kinds of directorial control over the style of the gesticulation without needlessly compromising human-likeness. Finally, it has been shown that the method is capable of convincingly synthesizing (controlled and uncontrolled) joint full-body posture, gesticulation and stance. This lifts the perspective from a focus on isolated body parts (e.g., hands or head) to holistically treating the entire human figure.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## REFERENCES

[AMMS19] AHUJA C., MA S., MORENCY L.-P., SHEIKH Y.: To react or not to react: End-to-end visual pose forecasting for personalized avatar during dyadic conversations. In Proc. ICMI (2019), pp. 74-84.

[AZS17] ARISTIDOU A., ZENG Q., STAVRAKIS E., YIN K., COHEN-OR D., CHRYSANTHOU Y., CHEN B.: Emotion control of unstructured dance movements. In Proc. SCA (2017), p. 9.

[BDS19] BROCK A., DONAHUE J., SIMONYAN K.: Large scale GAN training for high fidelity natural image synthesis. In Proc. ICLR (2019).

[BH00] BRAND M., HERTZMANN A.: Style machines. In Proc. SIG-GRAPH (2000), pp. 183-192.

[BK09] BERGMANN K., KOPP S.: GNetIc-using Bayesian decision net- works for iconic gesture generation. In Proc. IVA (2009), pp. 76-89.

[CBDJ19] CHEN R. T. Q., BEHRMANN J., DUVENAUD D., JACOBSEN J.-H.: Residual flows for invertible generative modeling. In Proc. NeurIPS (2019), pp. 9913-9923.

[CM11] CHIU C.-C., MARSELLA S.: How to train your avatar: A data driven approach to gesture generation. In Proc. IVA (2011), pp. 127-140.

[CMM15] CHIU C.-C., MORENCY L.-P., MARSELLA S.: Predicting co-verbal gestures: A deep and temporal modeling approach. In Proc. IVA (2015).

[CN19] CASTILLO G., NEFF M.: What do we express without knowing?: Emotion in gesture. In Proc. AAMAS (2019), pp. 702-710.

[FM18] FERSTL Y., MCDONNELL R.: Investigating the use of recurrent motion modelling for speech gesture generation. In Proc. IVA (2018), pp. 93-98.

[FNM19] FERSTL Y., NEFF M., MCDONNELL R.: Multi-objective adversarial gesture generation. In Proc. MIG (2019), pp. 3:1-3:10.

[GBK19] GINOSAR S., BAR A., KOHAVI G., CHAN C., OWENS A., MALIK J.: Learning individual styles of conversational gesture. In Proc. CVPR (2019), pp. 3497-3506.

[GH00] GHAHRAMANI Z., HINTON G. E.: Variational learning for switching state-space models. Neural Comput. 12, 4 (2000), 831-864.

[GLM17] GREENWOOD D., LAYCOCK S., MATTHEWS I.: Predicting head pose from speech with a conditional variational autoencoder. In Proc. Interspeech (2017), pp. 3991-3995.

[GMHP04] GROCHOW K., MARTIN S. L., HERTZMANN A., POPOVIC Z.: Style-based inverse kinematics. ACM T. Graphic. 23, 3 (2004), 522-531.

[G0016] GOODFELLOW I.: NIPS 2016 tutorial: Generative adversarial networks. arXiv preprint (2016). arXiv:1701.00160.

[GPAM14] GOODFELLOW I., POUGET-ABADIE J., MIRZA M., XU B., WARDE-FARLEY D., OZAIR S., COURVILLE A., BENGIO Y.: Generative adversarial nets. In Proc. NIPS (2014), pp. 2672-2680.

[HAB19] HENTER G. E., ALEXANDERSON S., BESKOW J.: MoGlow: Probabilistic and controllable motion synthesis using normalising flows. arXiv preprint (2019). arXiv:1905.06598.

[HHKK17] HOLDEN D., HABIBIE I., KUSAJIMA I., KOMURA T.: Fast neural style transfer for motion data. IEEE Comput. Graph. 37, 4 (2017), 42-49.

[HHS17] HABIBIE I., HOLDEN D., SCHWARZ J., YEARSLEY J., KOMURA T.: A recurrent variational autoencoder for human motion syn- thesis. In Proc. BMVC (2017).

[HKS17] HOLDEN D., KOMURA T., SAITO J.: Phase-functioned neural networks for character control. ACM T. Graphic. 36, 4 (2017), 42:1-42:13.

[HKS18] HASEGAWA D., KANEKO N., SHIRAKAWA S., SAKUTA H., SUMI K.: Evaluation of speech-to-gesture generation using bi- directional LSTM network. In Proc. IVA (2018), pp. 79-86.

[HPP05] HSU E., PULLI K., POPOVIC J.: Style translation for human motion. In ACM T. Graphic. (2005), vol. 24, pp. 1082-1089.

[HS97] HOCHREITER S., SCHMIDHUBER J.: Long short-term memory. Neural Comput. 9, 8 (1997), 1735-1780.

[HSK16] HOLDEN D., SAITO J., KOMURA T.: A deep learning framework for character motion synthesis and editing. ACM T. Graphic. 35, 4 (2016), 13H:1-13H:11.

[JKEB19] JONELL P., KUCHERENKO T., EKSTEDT E., BESKOW J.: Learning non-verbal behavior for a social robot from YouTube videos. In Proc. ICDL-EPIROB Workshop Nat. Non-Verbal Affect. Hum.-Robot Interact. (2019).

[KB15] KINGMA D. P., BA J.: Adam: A method for stochastic optimization. In Proc. ICLR (2015).

[KBE20] KUMAR M., BABAEIZADEH M., ERHAN D., FINN C., LEVINE S., DINH L., KINGMA D.: VideoFlow: A conditional flow- based model for stochastic video generation. In Proc. ICLR (2020).

[KD18] KINGMA D. P., DHARIWAL P.: Glow: Generative flow with invertible $1 \times 1$ convolutions. In Proc. NeurIPS (2018), pp. 10236-10245.

[KG10] KOPPENSTEINER M., GRAMMER K.: Motion patterns in political speech and their influence on personality ratings. J. Res. Pers. 44, 3 (2010), 374-379.

[KHH19] KUCHERENKO T., HASEGAWA D., HENTER G. E., KANEKO N., KJELLSTRÖM H.: Analyzing input and output representations for speech-driven gesture generation. In Proc. IVA (2019), pp. 97- 104.

[KJvW20] KUCHERENKO T., JONELL P., VAN WAVEREN S., HENTER G. E., ALEXANDERSON S., LEITE I., KJELLSTRÖM H.: Gesticulator: A framework for semantically-aware speech-driven gesture generation. arXiv preprint (2020). arXiv:2001.09326.

[KW14] KINGMA D. P., WELLING M.: Auto-encoding variational Bayes. In Proc. ICLR (2014).

[Lip98] LIPPA R.: The nonverbal display and judgment of extraversion, masculinity, femininity, and gender diagnosticity: A lens model analysis. J. Res. Pers. 32, 1 (1998), 80-107.

[LKM18] LUCIC M., KURACH K., MICHALSKI M., GELLY S., BOUSQUET O.: Are GANs created equal? A large-scale study. In Proc. NeurIPS (2018), pp. 698-707.

[LKTK10] LEVINE S., KRÄHENBÜHL P., THRUN S., KOLTUN V.: Gesture controllers. ACM T. Graphic. 29, 4 (2010), 124.

[LWH12] LEVINE S., WANG J. M., HARALTX A., POPOVIC Z., KOLTUN V.: Continuous character control with low-dimensional embeddings. ACM T. Graphic. 31, 4 (2012), 28.

[McN92] MCNEILL D.: Hand and Mind: What Gestures Reveal about Thought. University of Chicago Press, 1992.

[NLK13] NORMOYLE A., LIU F., KAPADIA M., BADLER N. I., JÖRG S.: The effect of posture and dynamics on the perception of emotion. In Proc. SAP (2013), pp. 91-98.

[PAM18] PUMAROLA A., AGUDO A., MARTINEZ A. M., SANFELIU A., MORENO-NOGUER F.: GANimation: Anatomically-aware facial animation from a single image. In Proc. ECCV (2018), pp. 818-833.

[PNR19] PAPAMAKARIOS G., NALISNICK E., REZENDE D. J., MOHAMED S., LAKSHMINARAYANAN B.: Normalizing flows for probabilistic modeling and inference. arXiv preprint (2019). arXiv: 1912.02762.

[PVC19] PRENGER R., VALLE R., CATANZARO B.: WaveGlow: A flow-based generative network for speech synthesis. In Proc. ICASSP (2019), pp. 3617-3621.

[PWP18] PHAM H. X., WANG Y., PAVLOVIC V.: Generative adversarial talking head: Bringing portraits to life with a weakly supervised neural network. arXiv preprint (2018). arXiv:1803.07716.

[RMW14] REZENDE D. J., MOHAMED S., WIERSTRA D.: Stochastic backpropagation and approximate inference in deep generative models. In Proc. ICML (2014), pp. 1278-1286.

[SB18] SADOUGHI N., BUSSO C.: Novel realizations of speech-driven head movements with generative adversarial networks. In Proc. ICASSP (2018), pp. 6169-6173.

[SB19] SADOUGHI N., BUSSO C.: Speech-driven animation with meaningful behaviors. Speech Commun. 110 (2019), 90-100.

[SCNW19] SMITH H. J., CAO C., NEFF M., WANGY.: Efficient neural networks for real-time motion style transfer. ACM T. Graphic. 2, 2 (2019), 13.

[SN17] SMITH H. J., NEFF M.: Understanding the impact of animated gesture performance on personality perceptions. ACM T. Graphic. 36, 4 (2017), 49.

[SSKS17] SUWAJANAKORN S., SEITZ S. M., KEMELMACHER-SHLIZERMAN I.: Synthesizing Obama: learning lip sync from audio. ACM T. Graphic. 36, 4 (2017), 95.

[VPP19] VOUGIOUKAS K., PETRIDIS S., PANTIC M.: Realistic speech-driven facial animation with GANs. Int. J. Comput. Vision (2019), 1-16.

[WFH08] WANG J. M., FLEET D. J., HERTZMANN A.: Gaussian process dynamical models for human motion. IEEE T. Pattern Anal. 30, 2 (2008), 283-298.

[WMK14] WAGNER P., MALISZ Z., KOPP S.: Gesture and speech in interaction: An overview. Speech Commun. 57 (2014), 209-232.

[WTY18] WANG X., TAKAKI S., YAMAGISHI J.: Autoregressive neural fo model for statistical parametric speech synthesis. IEEE/ACM T. Audio Speech 26, 8 (2018), 1406-1419.

[XWCH15] XIA S., WANG C., CHAI J., HODGINS J.: Realtime style transfer for unlabeled heterogeneous human motion. ACM T. Graphic. 34, 4 (2015), 119.

[YKJ19] YOON Y., KO W.-R., JANG M., LEE J., KIM J., LEE G.: Robots learn social skills: End-to-end learning of co-speech gesture generation for humanoid robots. In Proc. ICRA (2019).

**Claims**

1. A method (100) for providing a model suitable for speech-driven gesture synthesis, the method comprising:

   obtaining (110) combined speech and gesture training data;
   forming (120) conditioning data, said conditioning data comprising the speech training data;
   providing (122) a model of speaker pose sequences; and
   training (124) the model on the basis of the gesture training data and the conditioning data,
   wherein the conditioning data includes, for each time instance, past and future data,
   **characterized in that** the model of speaker pose sequences is an autoregressive model provided using normalizing flows, wherein each normalizing flow includes an invertible nonlinear transformation, whose parameters are determined by a neural network.

2. The method of claim 1, wherein the conditioning data includes future speech data.

3. The method of claim 1 or 2, further comprising obtaining (118) a time series of one or more style-control parameters from the gesture training data, said style-control parameters being computed from joint position data in the gesture training data,
   wherein the conditioning data further comprises the style-control parameters.

4. The method of any of the preceding claims, wherein the style-control parameters include one or more of: hand height, hand speed, gesticulation radius, correlation of right- and left-hand movements.

5. The method of any of the preceding claims, further comprising providing (116) additional training data by combining the speech training data with processed gesture training data, such as right-left mirrored gesture training data.

6. The method of any of the preceding claims, wherein each normalizing flow further includes one or more learned affine transformations, such as two or more learned affine transformations.

7. The method of any of the preceding claims, further comprising preprocessing (112) the speech training data to obtain a power spectrogram, such as a mel-frequency power spectrogram.

8. The method of any of the preceding claims, further comprising preprocessing (114) the gesture training data into an exponential-map representation.

9. The method of any of the preceding claims, further comprising preprocessing (114) the gesture training data by one or more of the following: time synchronization, downsampling, coordinate conversion, conversion to coordinates relative to a T-pose.

10. The method of any of the preceding claims, wherein the neural network includes one or more of: a recurrent neural network, RNN; a long short-term memory unit, LSTM unit; a gated recurrent unit, GRU.

11. The method of any of the preceding claims, wherein a nonzero dropout rate is applied to the neural network and/or its inputs.

12. A method (200) for speech-driven gesture synthesis using a model obtained by the method of any of the preceding claims, the method comprising:

obtaining (210) a speech signal; and
generating (218) a sequence of speaker poses from the model conditioned upon at least the speech signal.

13. The method of claim 12, further comprising applying (220) the sequence of speaker poses to a digital or physical character.

14. A computer program comprising instructions which, when the program is executed by a computer, cause the computer to carry out the method of any of the preceding claims.

15. A device comprising memory and processing circuitry configured to carry out the method of any of claims 1 to 13.

**Patentansprüche**

1. Verfahren (100) zum Bereitstellen eines Modells, das für sprachgesteuerte Gestensynthese geeignet ist, wobei das Verfahren umfasst:

Erhalten (110) von kombinierten Sprach- und GestenTrainingsdaten;
Bilden (120) von Konditionierungsdaten, wobei die Konditionierungsdaten die Sprachtrainingsdaten umfassen;
Bereitstellen (122) eines Modells von Sprecherposensequenzen; und
Trainieren (124) des Modells auf der Basis der Gestentrainingsdaten und der Konditionierungsdaten, wobei die Konditionierungsdaten für jede Zeitinstanz vergangene und zukünftige Daten einschließen; **dadurch gekennzeichnet, dass** das Modell der Sprecherposensequenzen ein autoregressives Modell ist, das unter Verwendung von Normalisierungsflüssen bereitgestellt wird, wobei jeder Normalisierungsfluss eine invertierbare nichtlineare Transformation einschließt, deren Parameter durch ein neuronales Netz bestimmt werden.

2. Verfahren nach Anspruch 1, wobei die Konditionierungsdaten zukünftige Sprachdaten einschließen.

3. Verfahren nach Anspruch 1 oder 2, des Weiteren umfassend Erhalten (118) einer Zeitreihe von einem oder mehreren Stilsteuerungsparametern aus den Gestentrainingsdaten, wobei die Stilsteuerungsparameter aus gemeinsamen Positionsdaten in den Gestentrainingsdaten berechnet werden, wobei die Konditionierungsdaten des Weiteren die Stilsteuerungsparameter umfassen.

4. Verfahren nach einem der vorhergehenden Ansprüche, wobei die Stilsteuerungsdaten ein oder mehrere von Handhöhe, Handgeschwindigkeit, Gestikulationsradius, Korrelation von Bewegungen der rechten und der linken Hand einschließen.

5. Verfahren nach einem der vorhergehenden Ansprüche, des Weiteren umfassend Bereitstellen (116) von zusätzlichen Trainingsdaten durch Kombinieren der Sprachtrainingsdaten mit verarbeiteten Gestentrainingsdaten, wie rechts-links-gespiegelten Gestentrainingsdaten.

6. Verfahren nach einem der vorhergehenden Ansprüche, wobei jeder Normalisierungsfluss des Weiteren eine oder mehrere erlernte affine Transformationen einschließt, wie zwei oder mehr erlernte affine Transformationen.

7. Verfahren nach einem der vorhergehenden Ansprüche, des Weiteren umfassend Vorverarbeiten (112) der Sprachtrainingsdaten, um ein Leistungsspektrogramm zu erhalten, wie ein Mel-Frequenzleistungsspektrogramm.

8. Verfahren nach einem der vorhergehenden Ansprüche, des Weiteren umfassend Vorverarbeiten (114) der Gestentrainingsdaten zu einer Exponentialkartendarstellung.

9. Verfahren nach einem der vorhergehenden Ansprüche, des Weiteren umfassend Vorverarbeiten (114) der Gestentrainingsdaten durch ein oder mehrere der folgenden: zeitliche Synchronisation, Downsampling, Koordinatenkonvertierung, Konvertierung in Koordinaten relativ zu einer T-Pose.

10. Verfahren nach einem der vorhergehenden Ansprüche, wobei das neuronale Netz ein oder mehrere der folgenden einschließt: ein rekurrentes neuronales Netz, RNN; eine lange Kurzzeitgedächtnis- (Long Short-Term Memory), LSTM, Einheit; eine geschlossene rekurrente Einheit, GRU.

**11.** Verfahren nach einem der vorhergehenden Ansprüche, wobei auf das neuronale Netz und/oder dessen Eingaben eine Abbruchquote ungleich Null angewendet wird.

**12.** Verfahren (200) zur sprachgesteuerten Gestensynthese unter Verwendung eines Modells, das nach dem Verfahren gemäß einem der vorhergehenden Ansprüche erhalten wurde, wobei das Verfahren umfasst:

Erhalten (210) eines Sprachsignals; und
Generieren (218) einer Sequenz von Sprecherposen aus dem Modell, das auf mindestens das Sprachsignal konditioniert ist.

**13.** Verfahren nach Anspruch 12, des Weiteren umfassend Anwenden (220) der Sequenz von Sprecherposen auf einen digitalen oder physischen Charakter.

**14.** Computerprogramm, umfassend Anweisungen, die bei Ausführung des Programms durch einen Computer bewirken, dass der Computer das Verfahren gemäß einem der vorhergehenden Ansprüche durchführt.

**15.** Vorrichtung, umfassend Speicher und Verarbeitungsschaltung(en), die konfiguriert ist bzw. sind, um das Verfahren nach einem der Ansprüche 1 bis 13 auszuführen.

**Revendications**

**1.** Procédé (100) pour fournir un modèle adapté à la synthèse gestuelle pilotée par la parole, le procédé comprenant de :

obtenir (110) des données combinées d'apprentissage de la parole et des gestes ;
former (120) des données de conditionnement, lesdites données de conditionnement comprenant les données d'apprentissage de la parole ;
fournir (122) un modèle de séquences de poses du locuteur ; et
entraîner (124) le modèle sur la base des données d'entraînement gestuel et des données de conditionnement, dans lequel les données de conditionnement comprend, pour chaque instance temporelle, des données passées et futures,
**caractérisé en ce que** le modèle de séquences de poses du locuteur est un modèle autorégressif fourni utilisant des flux de normalisation, dans lequel chaque flux de normalisation comprend une transformation non linéaire inversible, dont les paramètres sont déterminés par un réseau neuronal.

**2.** Procédé selon la revendication 1, dans lequel les données de conditionnement comprennent des données vocales futures.

**3.** Procédé selon la revendication 1 ou 2, comprenant en outre l'obtention (118) d'une série temporelle d'un ou plusieurs paramètres de contrôle de style à partir des données d'entraînement gestuel, lesdits paramètres de contrôle de style étant calculés informatiquement d'après des données de position d'articulation dans les données d'entraînement gestuel,
dans lequel les données de conditionnement comprennent en outre les paramètres de contrôle de style.

**4.** Procédé selon une quelconque des revendications précédentes, dans lequel les paramètres de contrôle de style comprennent un ou plusieurs parmi : la hauteur de la main, la vitesse de la main, le rayon de gesticulation, la corrélation des mouvements de la main droite et de la main gauche.

**5.** Procédé selon une quelconque des revendications précédentes, comprenant en outre la fourniture (116) de données d'apprentissage supplémentaires en combinant les données d'apprentissage de la parole avec des données d'apprentissage de gestes traitées, telles que des données d'apprentissage de gestes en miroir droite-gauche.

**6.** Procédé selon une quelconque des revendications précédentes, dans lequel chaque flux de normalisation comprend en outre une ou plusieurs transformations affines apprises, telles que deux ou plusieurs transformations affines apprises.

**7.** Procédé selon une quelconque des revendications précédentes, comprenant en outre le prétraitement (112) des données d'apprentissage de la parole pour obtenir un spectrogramme de puissance, tel qu'un spectrogramme de puissance de fréquence de Mel.

8. Procédé selon une quelconque des revendications précédentes, comprenant en outre le prétraitement (114) des données d'entraînement gestuel en une représentation cartographique exponentielle.

9. Procédé selon une quelconque des revendications précédentes, comprenant en outre le prétraitement (114) des données d'entraînement gestuel par un ou plusieurs des éléments suivants : synchronisation temporelle, sous-échantillonnage, conversion de coordonnées, conversion en coordonnées relatives à une pose en T.

10. Procédé selon une quelconque des revendications précédentes, dans lequel le réseau neuronal comprend un ou plusieurs parmi : un réseau neuronal récurrent, RNN ; une unité de mémoire à long court-terme, LSTM ; une unité récurrente fermée, GRU.

11. Procédé selon une quelconque des revendications précédentes, dans lequel un taux de décrochage non nul est appliqué au réseau neuronal et/ou à ses entrées.

12. Procédé (200) de synthèse gestuelle pilotée par la parole utilisant un modèle obtenu par le procédé selon une quelconque des revendications précédentes, le procédé comprenant de :

   obtenir (210) un signal vocal ; et
   générer (218) une séquence de poses de locuteur à partir du modèle conditionnée au moins par le signal vocal.

13. Procédé selon la revendication 12, comprenant en outre l'application (220) de la séquence de poses du locuteur à un personnage numérique ou physique.

14. Programme informatique comprenant des instructions qui, lorsque le programme est exécuté par un ordinateur, amènent l'ordinateur à exécuter le procédé selon une quelconque des revendications précédentes.

15. Dispositif comprenant une mémoire et des circuits de traitement configurés pour mettre en œuvre le procédé selon une quelconque des revendications 1 à 13.

Fig. 1

Fig. 2

Fig. 6f'

| ... | $x_{t-3}$ | $x_{t-2}$ | $x_{t-1}$ | $x_t$ | $x_{t+1}$ | $x_{t+2}$ | Generated poses |
|---|---|---|---|---|---|---|---|

Autoregression context

Conditioning info

$f$   Normalising flow

| ... | $h_{t-3}$ | $h_{t-2}$ | $h_{t-1}$ | $h_t$ | $h_{t+1}$ | $h_{t+2}$ | Hidden LSTM state |

| ... | $z_{t-3}$ | $z_{t-2}$ | $z_{t-1}$ | $z_t$ | $z_{t+1}$ | $z_{t+2}$ | Latents (white noise) |
|---|---|---|---|---|---|---|---|

| ... | $c_{t-3}$ | $c_{t-2}$ | $c_{t-1}$ | $c_t$ | $c_{t+1}$ | $c_{t+2}$ | Control inputs |
|---|---|---|---|---|---|---|---|

Sliding window

| ... | $a_{t-3}$ | $a_{t-2}$ | $a_{t-1}$ | $a_t$ | $a_{t+1}$ | $a_{t+2}$ | Acoustic features |
| ... | $s_{t-3}$ | $s_{t-2}$ | $s_{t-1}$ | $s_t$ | $s_{t+1}$ | $s_{t+2}$ | Optional style input |

Fig. 3

Fig. 4

Fig. 5

Fig. 6a

Fig. 6b

Fig. 6d

Fig. 6e

Fig. 6g

Fig. 6h

Fig. 6j

Fig. 6k

Fig. 6c

Fig. 6f

Fig. 6i

Fig. 6ℓ

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AHUJA C. ; MA S. ; MORENCY L.-P. ; SHEIKH Y.** To react or not to react: End-to-end visual pose forecasting for personalized avatar during dyadic conversations. *In Proc. ICMI,* 2019, 74-84
- **ARISTIDOU A ; ZENG Q ; STAVRAKIS E. ; YIN K. ; COHEN-OR D. ; CHRYSANTHOU Y. ; CHEN B.** Emotion control of unstructured dance movements. *In Proc. SCA,* 2017, 9
- **BROCK A. ; DONAHUE J. ; SIMONYAN K.** Large scale GAN training for high fidelity natural image synthesis. *In Proc. ICLR,* 2019
- **BRAND M. ; HERTZMANN A.** Style machines. *In Proc. SIG-GRAPH,* 2000, 183-192
- **BERGMANN K. ; KOPP S.** GNetIc-using Bayesian decision net- works for iconic gesture generation. *In Proc. IVA,* 2009, 76-89
- **CHEN R. T. Q. ; BEHRMANN J. ; DUVENAUD D. ; JACOBSEN J.-H.** Residual flows for invertible generative modeling. *In Proc. NeurIPS,* 2019, 9913-9923
- **CHIU C.-C. ; MARSELLA S.** How to train your avatar: A data driven approach to gesture generation. *In Proc. IVA,* 2011, 127-140
- **CHIU C.-C. ; MORENCY L.-P. ; MARSELLA S.** Predicting co-verbal gestures: A deep and temporal modeling approach. *In Proc. IVA,* 2015
- **CASTILLO G. ; NEFF M.** What do we express without knowing?: Emotion in gesture. *In Proc. AAMAS,* 2019, 702-710
- **FERSTL Y. ; MCDONNELL R.** Investigating the use of recurrent motion modelling for speech gesture generation. *In Proc. IVA,* 2018, 93-98
- **FERSTL Y. ; NEFF M ; MCDONNELL R.** Multi-objective adversarial gesture generation. *In Proc. MIG,* 2019, 3-1, 3-10
- **GINOSAR S. ; BAR A. ; KOHAVI G. ; CHAN C. ; OWENS A. ; MALIK J.** Learning individual styles of conversational gesture. *In Proc. CVPR,* 2019, 3497-3506
- **GHAHRAMANI Z. ; HINTON G. E.** Variational learning for switching state-space models. *Neural Comput.,* 2000, vol. 12 (4), 831-864
- **GREENWOOD D. ; LAYCOCK S ; MATTHEWS I.** Predicting head pose from speech with a conditional variational autoencoder. *In Proc. Interspeech,* 2017, 3991-3995
- **GROCHOW K. ; MARTIN S. L. ; HERTZMANN A. ; POPOVIC Z.** Style-based inverse kinematics. *ACM T. Graphic.,* 2004, vol. 23 (3), 522-531
- **GOODFELLOW I.** NIPS 2016 tutorial: Generative adversarial networks. *arXiv:1701.00160,* 2016
- **GOODFELLOW I. ; POUGET-ABADIE J. ; MIRZA M. ; XU B. ; WARDE-FARLEY D. ; OZAIR S ; COURVILLE A. ; BENGIO Y.** Generative adversarial nets. *In Proc. NIPS,* 2014, 2672-2680
- **HENTER G. E. ; ALEXANDERSON S. ; BESKOW J.** MoGlow: Probabilistic and controllable motion synthesis using normalising flows. arXiv preprint. *arXiv:1905.06598,* 2019
- **HOLDEN D. ; HABIBIE I. ; KUSAJIMA I. ; KOMURA T.** Fast neural style transfer for motion data. *IEEE Comput. Graph,* 2017, vol. 37 (4), 42-49
- **HABIBIE I. ; HOLDEN D. ; SCHWARZ J. ; YEARSLEY J. ; KOMURA T.** A recurrent variational autoencoder for human motion syn- thesis. *In Proc. BMVC,* 2017
- **HOLDEN D. ; KOMURA T. ; SAITO J.** Phase-functioned neural networks for character control. *ACM T. Graphic.,* 2017, vol. 36 (4), 42-1, 42-13
- **HASEGAWA D. ; KANEKO N. ; SHIRAKAWA S. ; SAKUTA H. ; SUMI K.** Evaluation of speech-to-gesture generation using bi- directional LSTM network. *In Proc. IVA,* 2018, 79-86
- **HSU E. ; PULLI K., POPOVIC J.** Style translation for human motion. *In ACM T. Graphic.,* 2005, vol. 24, 1082-1089
- **HOCHREITER S. ; SCHMIDHUBER J.** Long short-term memory. *Neural Comput.,* 1997, vol. 9 (8), 1735-1780
- **HOLDEN D. ; SAITO J. ; KOMURA T.** A deep learning framework for character motion synthesis and editing. *ACM T. Graphic.,* 2016, vol. 35 (4), 13H-1, 13H-11
- **JONELL P. ; KUCHERENKO T ; EKSTEDT E. ; BESKOW J.** Learning non-verbal behavior for a social robot from YouTube videos. *Proc. ICDL-EPIROB Workshop Nat. Non-Verbal Affect. Hum.-Robot Interact.,* 2019
- **KINGMA D. P. ; BA J.: ADAM.** A method for stochastic optimization. *Proc. ICLR,* 2015
- **KUMAR M. ; BABAEIZADEH M. ; ERHAN D. ; FINN C. ; LEVINE S. ; DINH L. ; KINGMA D.** VideoFlow: A conditional flow- based model for stochastic video generation. *Proc. ICLR,* 2020
- **KINGMA D. P. ; DHARIWAL P.** Glow: Generative flow with invertible $1\times1$ convolutions. In. *Proc. NeurIPS,* 2018, 10236-10245

- **KOPPENSTEINER M. ; GRAMMER K.** Motion patterns in political speech and their influence on personality ratings. *J. Res. Pers.,* 2010, vol. 44 (3), 374-379
- **KUCHERENKO T. ; HASEGAWA D. ; HENTER G. E. ; KANEKO N. ; KJELLSTRÖM H.** Analyzing input and output representations for speech-driven gesture generation. *Proc. IVA,* 2019, 97-104
- **KUCHERENKO T. ; JONELL P. ; VAN WAVEREN S. ; HENTER G. E. ; ALEXANDERSON S. ; LEITE I. ; KJELLSTRÖM H.** Gesticulator: A framework for semantically-aware speech-driven gesture generation. *arXiv:2001.09326,* 2020
- **KINGMA D. P. ; WELLING M.** Auto-encoding variational Bayes. *Proc. ICLR,* 2014
- **LIPPA R.** The nonverbal display and judgment of extraversion, masculinity, femininity, and gender diagnosticity: A lens model analysis. *J. Res. Pers.,* 1998, vol. 32 (1), 80-107
- **LUCIC M. ; KURACH K. ; MICHALSKI M. ; GELLY S. ; BOUSQUET O.** Are GANs created equal? A large-scale study. *Proc. NeurIPS,* 2018, 698-707
- **LEVINE S. ; KRÄHENBÜHL P. ; THRUN S. ; KOLTUN V.** Gesture controllers. *ACM T. Graphic.,* 2010, vol. 29 (4), 124
- **LEVINE S. ; WANG J. M. ; HARALTX A. ; POPOVIC Z. ; KOLTUN V.** Continuous character control with low-dimensional embeddings. *ACM T. Graphic.,* 2012, vol. 31 (4), 28
- **MCNEILL D.** Hand and Mind: What Gestures Reveal about Thought. University of Chicago Press, 1992
- **NORMOYLE A. ; LIU F. ; KAPADIA M. ; BADLER N. I. ; JÖRG S.** The effect of posture and dynamics on the perception of emotion. *Proc. SAP,* 2013, 91-98
- **PUMAROLA A. ; AGUDO A. ; MARTINEZ A. M. ; SANFELIU A ; MORENO-NOGUER F.** GANimation: Anatomically-aware facial animation from a single image. *Proc. ECCV,* 2018, 818-833
- **PAPAMAKARIOS G. ; NALISNICK E. ; REZENDE D. J. ; MOHAMED S. ; LAKSHMINARAYANAN B.** Normalizing flows for probabilistic modeling and inference. *arXiv: 1912.02762,* 2019
- **PRENGER R. ; VALLE R. ; CATANZARO B.** WaveGlow: A flow-based generative network for speech synthesis. *Proc. ICASSP,* 2019, 3617-3621
- **PHAM H. X. ; WANG Y. ; PAVLOVIC V.** Generative adversarial talking head: Bringing portraits to life with a weakly supervised neural network. *arXiv:1803.07716,* 2018
- **REZENDE D. J. ; MOHAMED S. ; WIERSTRA D.** Stochastic backpropagation and approximate inference in deep generative models. *Proc. ICML,* 2014, 1278-1286
- **SADOUGHI N. ; BUSSO C.** Novel realizations of speech-driven head movements with generative adversarial networks. *Proc. ICASSP,* 2018, 6169-6173
- **SADOUGHI N. ; BUSSO C.** Speech-driven animation with meaningful behaviors. *Speech Commun.,* 2019, vol. 110, 90-100
- **SMITH H. J. ; CAO C. ; NEFF M. ; WANGY.** Efficient neural networks for real-time motion style transfer. *ACM T. Graphic.,* 2019, vol. 2 (2), 13
- **SMITH H. J. ; NEFF M.** Understanding the impact of animated gesture performance on personality perceptions. *ACM T. Graphic.,* 2017, vol. 36 (4), 49
- **SUWAJANAKORN S. ; SEITZ S. M. ; KEMELMACHER-SHLIZERMAN I.** Synthesizing Obama: learning lip sync from audio. *ACM T. Graphic.,* 2017, vol. 36 (4), 95
- **VOUGIOUKAS K. ; PETRIDIS S. ; PANTIC M.** Realistic speech-driven facial animation with GANs. *Int. J. Comput. Vision,* 2019, 1-16
- **WANG J. M. ; FLEET D. J. ; HERTZMANN A.** Gaussian process dynamical models for human motion. *IEEE T. Pattern Anal.,* 2008, vol. 30 (2), 283-298
- **WAGNER P. ; MALISZ Z. ; KOPP S.** Gesture and speech in interaction: An overview. *Speech Commun.,* 2014, vol. 57, 209-232
- **WANG X. ; TAKAKI S. ; YAMAGISHI J.** Autoregressive neural fo model for statistical parametric speech synthesis. *IEEE/ACM T. Audio Speech,* 2018, vol. 26 (8), 1406-1419
- **XIA S. ; WANG C. ; CHAI J. ; HODGINS J.** Realtime style transfer for unlabeled heterogeneous human motion. *ACM T. Graphic.,* 2015, vol. 34 (4), 119
- **YOON Y. ; KO W.-R. ; JANG M. ; LEE J. ; KIM J. ; LEE G.** Robots learn social skills: End-to-end learning of co-speech gesture generation for humanoid robots. *Proc. ICRA,* 2019